# FASCICULE DE BREVET EUROPEEN

(11) **EP 1 745 223 B1**
(45) Date de publication et mention de la délivrance du brevet: **07.07.2010**
(21) Numéro de dépôt: 05770957.8
(22) Date de dépôt: 10.05.2005
(51) Int. Cl.: F16F 15/08, F16F 15/02, F16F 7/00, F16F 3/087

(54) **REVÊTEMENT ABSORBANT A HAUT POUVOIR AMORTISSANT**
HOCH-DÄMPFENDE ABSORBIERENDE BESCHICHTUNG
HIGH-DAMPING ABSORBING COATING

(30) Priorité: 13.05.2004 FR 0405165
(43) Date de publication de la demande: 24.01.2007
(73) Titulaire: EUROCOPTER, 13725 Marignane Cédex (FR)
(72) Inventeur: MANFREDOTTI, Thomas, F-06480 La Colle sur Loup (FR)
(74) Mandataire: GPI & Associés
(86) Numéro de dépôt international: PCT/FR2005/001160
(87) Numéro de publication internationale: WO 2005/121596

(56) Documents cités:
- WO-A-02/43047
- DE-C- 4 117 740
- FR-A- 2 838 173

## Description

La présente invention concerne un revêtement absorbant à haut pouvoir amortissant permettant de réduire, voire même supprimer, les déformations dynamiques d'une structure générées par des vibrations ou des chocs par exemple.

Plus particulièrement, le revêtement absorbant selon l'invention est préférentiellement destiné à être monté à bord d'un giravion. En étant notamment installé sur les parois de sa cabine, le revêtement absorbant atténue leurs déformations dynamiques de manière à augmenter leur durée de vie et à réduire le bruit en cabine.

Bien entendu, l'invention ne se limite pas à cette application particulière et peut être utilisée pour toutes autres applications dès l'instant ou l'on souhaite réduire les déformations dynamiques d'un corps. De par sa conception, on peut éventuellement envisager d'agencer, par exemple, le revêtement absorbant sur les parois d'une machine à laver, ce type d'instrument électroménager étant soumis à de fortes vibrations.

On connaît un premier système constitué d'une plaque d'élastomère monolithique agencée sur une structure. Le pouvoir amortissant de l'élastomère amoindrit alors les déformations dynamiques de la structure, quelque soit le mode de sollicitation mécanique de cette dernière, en dissipant notamment l'énergie sous forme de chaleur.

Néanmoins, l'efficacité de ce premier système est limitée puisque, de la sorte, l'oscillation de la structure n'induit que des petits mouvements dans l'élastomère. Ainsi, la dissipation de l'énergie dans la plaque d'élastomère est faible.

Pour améliorer ce premier système, il est courant d'utiliser un deuxième système. Ce dernier comporte un élastomère visco-contraint, c'est-à-dire une plaque d'élastomère dont la partie supérieure est préalablement adhérisée sur un support métallique. La partie inférieure de la plaque d'élastomère, opposée à la partie supérieure, est alors fixée sur une structure.

Lors d'une déformation dynamique, par exemple une flexion de la structure générée par des vibrations, la face supérieure est maintenue par le support métallique. Cette condition aux limites supplémentaire induit un état de contraintes internes dans l'élastomère plus important que dans les cas précédents. Par conséquent, la dissipation de l'énergie vibratoire dans la plaque d'élastomère s'en trouve augmentée.

Le deuxième système a certes un rendement supérieur à celui du premier système. Cependant, pour des applications nécessitant une dissipation de l'énergie vibratoire importante, il s'avère encore insuffisant.

La présente invention a pour objet de proposer un revêtement absorbant, permettant d'amortir considérablement les déformations dynamiques d'une structure.

Selon l'invention, un revêtement absorbant à haut pouvoir amortissant, fixé sur une structure, est pourvu d'une couche absorbante en matériau élastique, notamment de l'élastomère. De façon remarquable, cette couche absorbante comporte un maillage dissipateur, agencé dans le matériau élastique, constitué d'une pluralité de noeuds et d'éléments dissipateurs.

La réalisation industrielle du maillage dissipateur est grandement facilitée lorsque ce dernier, et par conséquent les noeuds et les éléments dissipateurs, est usiné ou moulé d'un seul tenant à partir d'un unique bloc de matière déformable, du plastique par exemple.

De plus, préférentiellement, l'extrémité inférieure des noeuds émerge de la matière élastique. La couche absorbante est alors éloignée de la structure en lui étant uniquement fixée par l'intermédiaire des noeuds.

Ainsi, une déformation dynamique de la structure entraîne des déplacements différentiels des noeuds. Les éléments dissipateurs sont alors sollicités ce qui a pour effet de modifier leur géométrie.

De cette manière, la dissipation d'énergie dans la couche absorbante est importante puisque la matière élastique est déformée, d'une part, par un effet de bras de leviers provoqué par les noeuds qui maintiennent les éléments dissipateurs éloignés de la structure et, d'autre part, par les éléments dissipateurs qui répartissent les sollicitations transmises par les noeuds dans l'ensemble de la matière élastique tout en les amplifiant par un effet géométrique. Afin que cette amplification soit optimisée, au moins un élément dissipateur a avantageusement une forme d'ellipse, chaque ellipse étant liée à deux noeuds disposés aux intersections de sa périphérie et de son grand axe.

De manière remarquable et pour faciliter le montage du revêtement absorbant sur une structure, la face inférieure de l'extrémité inférieure de chacun des noeuds, c'est-à-dire la face en contact avec la structure, est de préférence recouverte d'un matériau auto-adhésif.

En outre, selon l'invention, le matériau élastique comporte une pluralité d'évidements afin qu'il puisse travailler le plus efficacement possible. Ces évidements permettent alors de réduire sensiblement la masse du revêtement absorbant.

Par ailleurs, afin d'optimiser son rendement dissipatif, le matériau élastique et les éléments dissipateurs ont de préférence une hauteur identique.

Dans un premier mode de réalisation, le maillage dissipateur a un motif récurrent carré à savoir un motif possédant quatre noeuds et cinq éléments dissipateurs.

Dans un second mode de réalisation, le maillage dissipateur a un motif récurrent triangulaire pourvu de trois noeuds et trois éléments dissipateurs.

Selon une variante de l'invention, le revêtement absorbant est visco-contraint. Il comporte donc une contreplaque rigide, la couche absorbante étant alors agencée entre cette contreplaque rigide et la structure.

Dans cette configuration, le revêtement absorbant est de plus avantageusement muni d'une contreplaque élastique disposée entre la contreplaque rigide et la couche absorbante.

L'invention et ses avantages apparaîtront avec plus de détails dans le cadre de la description, qui suit avec des exemples de réalisation donnés à titre illustratif en référence aux figures annexées qui représentent:
- la figure 1, une vue de dessus d'une couche absorbante pourvue d'un maillage dissipateur,
- la figure 2, une vue de côté d'une structure munie d'une couche absorbante selon l'invention,
- la figure 3, une vue d'un élément dissipateur en forme d'ellipse,
- la figure 4, une vue de dessus d'un maillage dissipateur selon un premier mode de réalisation,
- la figure 5, une vue de dessus d'un maillage dissipateur selon un deuxième mode de réalisation, et
- la figure 6, une vue de côté d'un revêtement absorbant selon une variante de l'invention.

Les éléments présents dans plusieurs figures distinctes sont affectés d'une seule et même référence.

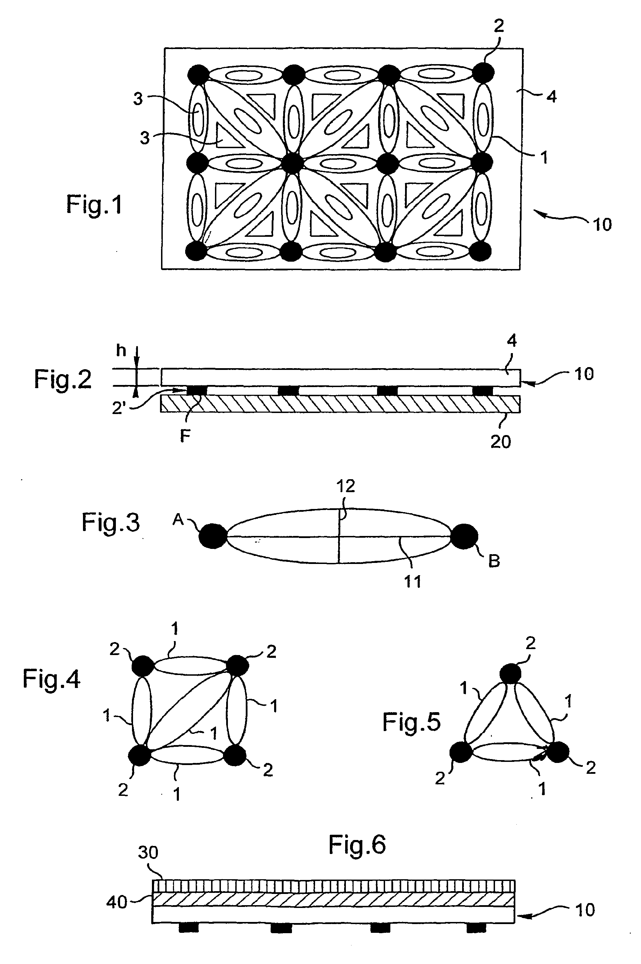

La figure 1 présente une couche absorbante 10 en matériau élastique 4, de préférence de l'élastomère, pourvue d'un maillage dissipateur en matériau déformable, du plastique par exemple.

Ce maillage est constitué d'une pluralité de noeuds 2 et d'éléments dissipateurs 1. Ces derniers sont par exemple composés d'ellipses mais pourraient avoir tout autre forme (barre, losange...) suivant le besoin, sans sortir du cadre de l'invention.

Par ailleurs, une pluralité d'évidements 3 sont répartis sur l'ensemble du matériau élastique 4.

En référence à la figure 2, cette couche absorbante 10 est fixée sur une structure 20.

Pour ce faire, les extrémités 2' de chaque noeud 2 émergent de la matière élastique 4. Leur face inférieure F, située à l'extérieur de cette matière élastique 4, est alors liée à la structure 20, par collage par exemple, de manière à éloigner la matière élastique 4 de la structure 20.

Dans le but de faciliter ce collage, et donc le montage, la face inférieure F de chaque extrémité 2' est recouverte d'un matériau auto-adhésif.

On remarque que la fixation de la couche absorbante 10 sur la structure 20 est particulièrement facile à réaliser. Ainsi, on peut l'installer sur n'importe quel type de paroi existante, un plafond de la cabine d'un giravion par exemple, sans surcoût particulier.

En outre, les éléments dissipateurs 1 et la matière élastique 4 ont une hauteur h identique, relativement faible. La couche absorbante 10 a alors un encombrement faible ce qui autorise un montage sur une structure même si cette dernière se trouve dans un espace exigu.

Par ailleurs, d'un point de vue fonctionnel, lorsque la structure 20 est déformée sous l'effet d'une vibration, quelque soit le mode (traction, flexion...) de la sollicitation, les noeuds 2 se déplacent entraînant ainsi un mouvement dans la matière élastique 4. Ce dernier est amplifié par un effet de bras de levier induit par la distance séparant alors la matière élastique 4 de la structure 20.

De plus, le déplacement des noeuds 2 a pour effet de modifier la géométrie des éléments dissipateurs 1. On verra notamment ci-après qu'en se rétractant et en s'allongeant, des éléments dissipateurs 1 en forme d'ellipses induisent une déformation amplifiée de la matière élastique 4.

L'effet conjugué des éléments dissipateurs 1 et des noeuds 2 confère donc à la couche absorbante 10 un fort pouvoir dissipatif permettant de fortement diminuer d'éventuelles déformations dynamiques de la structure 20.

La figure 3 présente une vue d'un élément dissipateur 1 en forme d'ellipse lié à deux noeuds A, B. Ces noeuds A, B sont disposés sur les intersections de la périphérie et du grand axe 11 de l'ellipse.

De cette manière, le rendement du revêtement selon l'invention est optimal. En effet, de par la géométrie d'une ellipse, une faible réduction de la taille du grand axe 11 induit une augmentation importante de celle du petit axe 12. Ainsi, une faible sollicitation de l'ellipse selon le grand axe 11 est fortement amplifiée en provoquant une forte déformation du petit axe 12. Cet effet, multiplié par le nombre d'ellipses du maillage dissipateur, confère au revêtement selon l'invention un haut pouvoir amortissant.

La figure 4 présente un premier mode de réalisation. Le maillage dissipateur a alors un motif récurrent carré.

Ce motif carré comporte quatre noeuds 2 et quatre éléments dissipateurs 1 qui représentent respectivement les coins et les côtés d'un carré. De plus, un cinquième élément dissipateur est disposé selon une diagonale de ce carré.

La figure 5 présente un deuxième mode de réalisation. Dans ce mode, le motif récurrent du maillage dissipateur est triangulaire. Trois noeuds 2 et trois éléments dissipateurs 1 représentent alors respectivement les coins et les côtés d'un triangle.

En fonction du niveau de sollicitation de la structure, l'un ou l'autre de ces deux modes de réalisation sera privilégié.

La figure 6 présente une variante de l'invention.

Afin de visco-contraindre la matière élastique 4, le revêtement absorbant comporte une contreplaque rigide 30.

De plus, dans le but de laisser un maximum de latitude de déplacement aux noeuds 2 de la couche absorbante, une contreplaque élastique 40 est agencée entre la contreplaque rigide 30 et la couche absorbante 10.

Naturellement, la présente invention est sujette à de nombreuses variations quant à sa mise en oeuvre. Bien que plusieurs modes de réalisation aient été décrits, on comprend bien qu'il n'est pas concevable d'identifier de manière exhaustive tous les modes possibles. Il est bien sûr envisageable de remplacer un moyen décrit par un moyen équivalent sans sortir du cadre de la présente invention.

## Revendications

1. Revêtement absorbant à haut pouvoir amortissant, fixé sur une structure (20), pourvu d'une couche absorbante (10) en matériau élastique (4),
**caractérisé en ce que** ladite couche absorbante (10) comporte un maillage dissipateur, agencé dans ledit matériau élastique (4), constitué d'une pluralité d'éléments dissipateurs (1) et de noeuds (2).

2. Revêtement selon la revendication 1,
**caractérisé en ce que**, l'extrémité inférieure (2') desdits noeuds émergeant de ladite couche absorbante (10), cette dernière est éloignée de ladite structure (20) en lui étant uniquement fixée par l'intermédiaire des noeuds (2).

3. Revêtement selon l'une quelconque des revendications précédentes,
**caractérisé en ce que** la face inférieure (F) de ladite extrémité inférieure (2') est recouverte d'un matériau auto-adhésif.

4. Revêtement selon l'une quelconque des revendications précédentes,
**caractérisé en ce que** ledit matériau élastique (4) est en élastomère.

5. Revêtement selon l'une quelconque des revendications précédentes,
**caractérisé en ce que** ledit matériau élastique (4) comporte de plus une pluralité d'évidements (3).

6. Revêtement selon l'une quelconque des revendications précédentes,
**caractérisé en ce que** ledit maillage dissipateur a un motif récurrent carré.

7. Revêtement selon l'une quelconque des revendications 1 à 5,
**caractérisé en ce que** ledit maillage dissipateur a un motif récurrent triangulaire.

8. Revêtement selon l'une quelconque des revendications précédentes,
**caractérisé en ce qu'**au moins un élément dissipateur (1) est une ellipse.

9. Revêtement selon l'une quelconque des revendications précédentes,
**caractérisé en ce que** ladite ellipse est liée à deux noeuds (2) disposés aux intersections de sa périphérie et de son grand axe (11).

10. Revêtement selon l'une quelconque des revendications précédentes,
**caractérisé en ce qu'**il comporte une contreplaque rigide (30), ladite couche absorbante (10) étant alors agencée entre ladite structure (20) et ladite contreplaque rigide (30).

11. Revêtement selon la revendication 10,
**caractérisé en ce qu'**il comporte une contreplaque élastique (40) disposée entre ladite contreplaque rigide (30) et ladite couche absorbante (10).

12. Revêtement selon l'une quelconque des revendications précédentes,
**caractérisé en ce que** ledit matériau élastique (4) et lesdits éléments dissipateurs (1) ont une hauteur (h) identique.

13. Revêtement selon l'une quelconque des revendications précédentes,
**caractérisé en ce que** ledit maillage dissipatif est usiné d'un seul tenant à partir d'un unique bloc de matière déformable.

14. Revêtement selon l'une quelconque des revendications précédentes,
**caractérisé en ce que** ledit maillage dissipatif est obtenu par moulage d'un bloc de matière déformable en un seul tenant.

## Claims

1. Absorbent covering having high damping power, said covering being secured to a structure (20) and being provided with an absorbent layer (10) of elastic material (4),
**characterised in that** said absorbent layer (10) comprises a dissipater mesh arranged in said elastic material (4) and constituted by a plurality of dissipater elements (1) and of nodes (2).

2. Covering according to Claim 1,
**characterised in that** the bottom end (2') of said nodes emerges from said absorbent layer (10) so that the absorbent layer is spaced apart from said structure (20), said absorbent layer being secured to said structure solely via the nodes (2).

3. Covering according to any one of the preceding claims,
**characterised in that** the bottom face (F) of said bottom end (2') is covered in a self-adhesive material.

4. Covering according to any one of the preceding claims,
**characterised in that** said elastic material (4) is made of elastomer.

5. Covering according to any one of the preceding claims,
**characterised in that** said elastic material (4) further includes a plurality of recesses (3).

6. Covering according to any one of the preceding claims,
**characterised in that** said dissipater mesh has a repeated square pattern.

7. Covering according to any one of the preceding Claims 1 to 5,
**characterised in that** said dissipater mesh has a repeated triangular pattern.

8. Covering according to any one of the preceding claims,
**characterised in that** at least one dissipater element (1) is an ellipse.

9. Covering according to any one of the preceding claims,
**characterised in that** said ellipse is connected to two nodes (2) located at the points of intersection between the periphery of the ellipse and its major axis (11).

10. Covering according to any one of the preceding claims,
**characterised in that** it includes a rigid backing plate (30), said absorbent layer (10) then being arranged between said structure (20) and said rigid backing plate (30) .

11. Covering according to Claim 10,
**characterised in that** it includes an elastic backing plate (40) disposed between said rigid backing plate (30) and said absorbent layer (10).

12. Covering according to any one of the preceding claims,
**characterised in that** said elastic material (4) and said dissipater elements (1) are identical in height (h).

13. Covering according to any one of the preceding claims,
**characterised in that** said dissipative mesh is machined as a single piece from a single block of deformable material.

14. Covering according to any one of the preceding claims,
**characterised in that** said dissipative mesh is obtained by moulding a one-piece block of deformable material.

## Patentansprüche

1. Hochdämpfende absorbierende Beschichtung, die auf einem Unterbau (20) befestigt ist und mit einer absorbierenden Schicht (10) aus elastischem Material (4) versehen ist,
**dadurch gekennzeichnet, dass** die absorbierende Schicht (10) ein Verteilungsnetzwerk aufweist, welches in dem elastischen Material (4) ausgebildet ist und aus einer Mehrzahl von Verteilungselementen (1) und Verbindungspunkten (2) besteht.

2. Beschichtung nach Anspruch 1,
**dadurch gekennzeichnet, dass** das untere Ende (2') der Verbindungspunkte aus der absorbierenden Schicht (10) vorsteht, wobei die absorbierende Schicht von dem Unterbau (20) absteht und an dieser nur über die Verbindungspunkte (2) befestigt ist.

3. Beschichtung nach einem der vorstehenden Ansprüche,
**dadurch gekennzeichnet, dass** die untere Seite (F) des unteren Endes (2') mit einem selbstklebenden Material bedeckt ist.

4. Beschichtung nach einem der vorstehenden Ansprüche,
**dadurch gekennzeichnet, dass** das elastische Material (4) aus einem Elastomer besteht.

5. Beschichtung nach einem der vorstehenden Ansprüche,
**dadurch gekennzeichnet, dass** das elastische Material (4) außerdem eine Mehrzahl von Ausnehmungen (3) aufweist.

6. Beschichtung nach einem der vorstehenden Ansprüche,
**dadurch gekennzeichnet, dass** das Verteilungsnetzwerk ein sich wiederholendes rechteckiges Muster aufweist.

7. Beschichtung nach einem der Ansprüche 1 bis 5,
**dadurch gekennzeichnet, dass** das Verteilungsnetzwerk ein sich wiederholendes dreieckiges Muster aufweist.

8. Beschichtung nach einem der vorstehenden Ansprüche,
**dadurch gekennzeichnet, dass** mindestens 1 der Verteilungselemente (1) eine Ellipse ist.

9. Beschichtung nach einem der vorstehenden Ansprüche,
**dadurch gekennzeichnet, dass** die Ellipse mit zwei Verbindungspunkten (2) verbunden ist, die an den Schnittstellen zwischen ihrem Umfang und ihrer großen Achse (11) angeordnet sind.

10. Beschichtung nach einem der vorstehenden Ansprüche,
**dadurch gekennzeichnet, dass** sie eine steife Gegenplatte (30) aufweist und die absorbierende Schicht (10) zwischen dem Unterbau (20) und der steifen Gegenplatte (30) angeordnet ist.

11. Beschichtung nach Anspruch 10,
**dadurch gekennzeichnet, dass** sie eine elastische Gegenplatte (40) aufweist, die zwischen der steifen Gegenplatte (30) und der absorbierenden Schicht (10) angeordnet ist.

12. Beschichtung nach einem der vorstehenden Ansprüche,
**dadurch gekennzeichnet, dass** das elastische Material (4) und die Verteilungselemente (1) eine identische Höhe (h) aufweisen.

13. Beschichtung nach einem der vorstehenden Ansprüche,
**dadurch gekennzeichnet, dass** das Verteilungsnetzwerk einstückig aus einem einzigen Block aus verformbaren Material herausgearbeitet ist.

14. Beschichtung nach einem der vorstehenden Ansprüche,
**dadurch gekennzeichnet, dass** das Verteilernetzwerk durch Vergießen eines Blocks aus verformbaren Material einstückig hergestellt ist.
